# EUROPEAN PATENT APPLICATION

(11) **EP 3 583 850 A1**
(43) Date of publication of application: **25.12.2019**
(21) Application number: 18178598.1
(22) Date of filing: 19.06.2018
(51) Int. Cl.: A01N 43/40, A01N 57/20, A01P 13/00

(54) **HERBICIDAL COMPOSITIONS COMPRISING DIFLUFENICAN AND GLYPHOSATE AND USES THEREOF**

(71) Applicant: Rotam Agrochem International Co., Ltd, Chai Wan, Hong Kong (CN)
(72) Inventor: BRISTOW, James Timothy, Chai Wan, Hong Kong N/A (CN)
(74) Representative: Akers, Noel James

(57) **Abstract**

A herbicidal composition is provided, the composition comprising components:
(A) diflufenican; and
(B) glyphosate.

A method for controlling unwanted plant growth at a locus comprises applying to the locus component (A) diflufenican and component (B) glyphosate. There is also provided the use of component (A) diflufenican to reduce the phytotoxicity of component (B) glyphosate. There is further provided the use of component (B) glyphosate to reduce the phytotoxicity of component (A) diflufenican. The composition and method are particularly useful in the control of unwanted plant growth in crop plants while causing reduced damage to the crop plants.

## Description

The present invention concerns a herbicidal composition, a method for controlling plant growth and the use of the composition in in controlling plant growth. The present invention also relates to the reduction of the phytotoxic effects on desirable plants of certain herbicidally active compounds.

Undesired plant growth causes significant yield reduction in a wide range of crops. Therefore, the control of the undesired plant growth is crucial to obtain high productivity in crops and is a continual objective in the agricultural field.

Glyphosate, N-(phosphonomethyl)glycine, is a well known herbicide and is available in a range of commercial formulations. Glyphosate inhibits 5-enolpyruvylshikimate-3-phosphate synthase and prevents synthesis of essential aromatic amino acids, which the plant needs for protein biosynthesis. Glyphosate is a non-selective, systemic herbicide and is readily absorbed by the plant through its foliage.

A problem with glyphosate is that the compound is phytotoxic to a range of crop plants. This gives rise to problems when wishing to control the growth of unwanted plants in such crops. Pepper (*Capsicum annum*) is an example of the sensitive crop plants. The plants exhibit injury after application of glyphosate, in turn reducing the yield of the plants. It has been found that foliar injury increased and plant vigor declined with increased rates of glyphosate and that these effects were exacerbated by a second application (James P. Gilreath et al., 'Phytotoxic Effects of Glyphosate on Pepper (Capsicum annuum)', Weed technology, 2000, vol. 14, pages 488 to 494). It has also been found that corn plants that absorbed more than 0.6 µg of glyphosate exhibited a decrease in growth (Rodrigo Wagner et al., 'Phytotoxic activity of root absorbed glyphosate in corn seedlings (Zea mays L.)', Weed Biology and Management, 2003, vol. 3, issue 4, pages 228-232). Sugarcane can show a phytotoxic reaction to glyphosate. In particular, the leaves of sugarcane plants become droopy, flaccid and yellow or necrotic and the sugarcane plant exhibits a marked growth reduction.

Therefore, it would be most advantageous if a way could be found to reduce the phytotoxic effects of glyphosate on desirable plants, such as crop plants.

N-(2,4-difluorophenyl)-2-[3-(trifluoromethyl)phenoxy]-3-pyridinecarboxamide is a known pyridine herbicide having the common name diflufenican and the following structure:

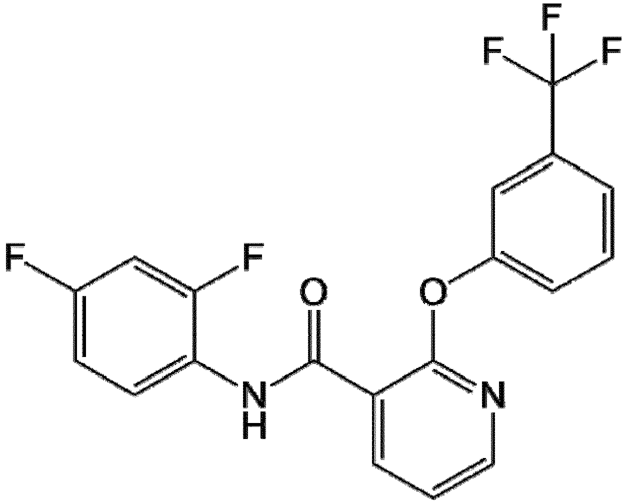

Diflufenican blocks carotenoid biosynthesis by inhibiting the action of phytoene desaturase. Diflufenican is a selective, contact and residual herbicide and is absorbed principally by the shoots of germinating seedling with limited translocation.

Diflufenican is mildly phytotoxic to plants and gives rise to damage in the form of small transient patches on basal leaves. It has also been found that when applied in high concentrations diflufenican injures rice plants.

Any reduction in the phytotoxic effects of diflufenican on desirable plants, such as crop plants, would be advantageous.

It has now surprisingly been found that the combination of diflufenican and glyphosate results in a significant reduction in the phytotoxic effects of both diflufenican and glyphosate, particularly on crop plants such as oil plants, citrus fruits and vines, without reducing the effectiveness of these compounds in the control of undesired plant growth.

"Phytotoxicity" in the context of the present invention relates to any effect of a herbicide that hinders the ordinary development of a desirable plant, such as a crop plant. Phytotoxic effects of a herbicide may reduce the growth of a plant and may even cause its death. Therefore, no or low phytotoxic effect is desirable to maintain healthy plants.

In a first aspect, the present invention provides a herbicidal composition comprising:
(A) diflufenican; and
(B) glyphosate.

As noted above, it has been found that the presence of diflufenican significantly reduces the phytotoxic effects of glyphosate on desirable plants, in particular crop plants. In addition, it has been found that the phytotoxic effects of diflufenican are significantly reduced by the presence of glyphosate.

The two components (A) and (B) can each be present in the composition in any suitable amount to provide the required herbicidal activity without exhibiting an undesirably high level of phytotoxicity to the plants to be protected. The total amount of the component (A) and the component (B) in the composition may be from 5% to 99% by weight, preferably from 5% to 80%, more preferably from 10% to 70%, still more preferably from 15% to 60%, more preferably still from 20% to 50%, especially from 25% to 45%. In one preferred embodiment, the components (A) and (B) combined comprise 30% by weight of the herbicidal composition.

Component (A) diflufenican may be present in the composition in an amount of from 0.5% by weight, preferably from 1%, more preferably from 1.5%, still more preferably from 2%, more preferably still from 2.5% by weight. Component (A) diflufenican may be present in the composition in an amount of up to 90% by weight, preferably up to 75%, more preferably up to 50%, still more preferably up to 40%, more preferably still up to 30%, especially up to 20% by weight. Component (A) diflufenican may be present in the composition in an amount of from 0.5 to 90% by weight, preferably from 1 to 80%, more preferably from 1 to 60%, still more preferably from 1 to 40%, more preferably still from 2 to 30% by weight. In many preferred embodiments component (A) diflufenican is present in an amount of from 0.5 to 10% by weight, preferably from 1 to 8%, more preferably from 1.5 to 6%, still more preferably from 2 to 5% by weight. An amount of about 3% by weight diflufenican has been found to be particularly effective.

Component (B) glyphosate may be present in the composition in an amount of from 0.5% by weight, preferably from 1%, more preferably from 1.5%, still more preferably from 2%, more preferably still from 2.5% by weight. Component (B) glyphosate may be present in the composition in an amount of up to 90% by weight, preferably up to 80%, more preferably up to 60%, still more preferably up to 50%, more preferably still up to 40%, especially up to 35% by weight. Component (B) glyphosate may be present in the composition in an amount of from 0.5 to 90% by weight, preferably from 1 to 80%, more preferably from 1 to 70%, still more preferably from 1 to 60%, more preferably still from 2 to 50% by weight. In many preferred embodiments component (B) glyphosate is present in an amount of from 5 to 50% by weight, preferably from 10 to 40%, more preferably from 15 to 35%, still more preferably from 20 to 30% by weight, especially from 25 to 30%. An amount of about 27% by weight glyphosate has been found to be particularly effective.

One preferred composition comprising component (A) diflufenican in an amount of 3% by weight and component (B) glyphosate in an amount of 27% by weight.

The herbicidal composition may further contain one or more agriculturally acceptable auxiliaries. The auxiliaries employed in the composition and their amounts will depend upon the type of formulation and/or the manner in which the formulation is to be applied by the end user. Suitable auxiliaries are customary formulation adjuvant or components, such as dispersants, wetting agents, extenders, carriers, solvents, surfactants, stabilizers, anti-foaming agents, anti-freezing agents, preservatives, antioxidants, colorants, thickeners, solid adherents and inert fillers. Such auxiliaries are known in the art and are commercially available. Their use in the formulation of the compositions of the present invention will be apparent to the person skilled in the art.

The herbicidal composition may comprise one or more dispersants. Suitable dispersants are known in the art and are commercially available. Examples of suitable dispersants include, but are not limited to, DISPERSOGEN®1494, sodium lignosulphonate, sulfonated aromatic polymer, sodium salt and fatty alcohol polyglycol ether.

The herbicidal composition may comprise one or more wetting agents. Suitable wetting agents are known in the art and are commercially available. Examples of suitable wetting agents include, but are not limited to, sodium N-methyl-N-oleyl taurate, octylphenoxy polyethoxy ethanol, nonylphenoxy polyethoxy ethanol, sodium dioctyl sulfosuccinate, sodium dodecyl benzyl sulfonate, sodium lauryl sulfonate, sodium alkyl naphthalene sulfonate, sodium sulfonated alkyl carboxylate, and sodium alkyl naphthalene sulfonate.

The herbicidal composition may comprise one or more solvents. The solvent may be organic or inorganic. Suitable solvents are selected from customary solvents which thoroughly dissolve one or preferably both of the agrochemically active substances employed. Suitable solvents are known in the art and are commercially available. Examples of suitable solvents include water; aromatic solvents, such as xylene (for example solvent products commercially available from SOLVESSO™); mineral oils; animal oils; vegetable oils; alcohols, for example methanol, butanol, pentanol, and benzyl alcohol; ketones, for example cyclohexanone, and gamma-butyrolactone; pyrrolidones, such as NMP, and NOP; acetates, such as glycol diacetate; glycols; fatty acid dimethylamides; fatty acids; and fatty acid esters.

The herbicidal composition may further comprise one or more surfactants. Suitable surfactants are known in the art and include, but are not limited to, alkali metal, alkaline earth metal and ammonium salts of lignosulfonic acid, naphthalenesulfonic acid, phenolsulfonic acid, dibutylnaphthalenesulfonic acid, alkylarylsulfonates, alkyl sulfates, alkylsulfonates, arylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol, octylphenol, nonylphenol, alkylphenyl polyglycol ethers, tributylphenyl polyglycol ether, tristearylphenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and methylcellulose and ethylene oxide/propylene oxide block copolymers. Suitable surfactants are commercially available.

The herbicidal composition may further comprise one or more polymeric stabilizers. Suitable polymeric stabilizers that may be used in the present invention include, but are not limited to, polypropylene, polyisobutylene, polyisoprene, copolymers of monoolefins and diolefins, polyacrylates, polystyrene, polyvinyl acetate, polyurethanes or polyamides. Suitable stabilizers are known in the art and are commercially available.

The herbicidal composition may further comprise one or more anti-foaming agents. Suitable anti-foaming agents include those substances which can normally be used for this purpose in agrochemical compositions and will be readily apparent to the person skilled in the art. Suitable anti-foaming agents are known in the art and are commercially available. Particularly preferred anti-foaming agents are mixtures of polydimethylsiloxanes and perfluroalkylphosphonic acids, such as the silicone anti-foaming agents (for example commercially available from GE or Compton). Another example of suitable anti-foaming agents is fatty acids, such as tallow, and their sodium salts.

The herbicidal composition may further comprise one or more preservatives. Suitable preservatives include those substances which can normally be used for this purpose in agrochemical compositions of this type and again are well known in the art. Suitable examples that may be mentioned include PREVENTOL® (commercially available from Bayer AG) and PROXEL® (commercially available from Bayer AG).

The herbicidal composition may further comprise one or more antioxidants. Suitable antioxidants are substances which can normally be used for this purpose in agrochemical compositions, as is known in the art. Preference is given, for example, to butylated hydroxytoluene.

The herbicidal composition may further comprise one or more solid adherents. Such adherents are known in the art and available commercially. They include organic adhesives, including tackifiers, such as celluloses of substituted celluloses, natural and synthetic polymers in the form of powders, granules, or lattices, and inorganic adhesives such as gypsum, silica, or cement.

The herbicidal composition may further comprise one or more inert fillers. Such inert fillers are known in the art and available commercially. Suitable fillers include, for example, natural ground minerals, such as kaolin, alumina, talc, chalk, quartz, attapulgite, montmorillonite, and diatomaceous earth, or synthetic ground minerals, such as highly dispersed silicic acid, aluminum oxide, silicates, and calcium phosphates and calcium hydrogen phosphates. Suitable inert fillers for granules include, for example, crushed and fractionated natural minerals, such as calcite, marble, pumice, sepiolite, and dolomite, or synthetic granules of inorganic and organic ground materials, as well as granules of organic material, such as sawdust, coconut husks, corn cobs, and tobacco stalks. Examples of inert fillers also include sodium tripolyphosphate and sucrose.

The herbicidal composition may further comprise one or more thickeners. Suitable thickeners include those substances which can normally be used for this purpose in agrochemical compositions. Examples of suitable thickeners include gums, such as xanthan gum, PVOH, cellulose and its derivatives, clay hydrated silicates, magnesium aluminum silicates or a mixture thereof. Again, such thickeners are known in the art and are available commercially.

The herbicidal composition may be provided in any suitable formulation, for example, a water-soluble concentrate (SL), an emulsifiable concentrate (EC), an emulsion (EW), a micro-emulsion (ME), a suspension concentrate (SC), an oil-based suspension concentrate (OD), a flowable suspension (FS), a water-dispersible granule (WG), water-soluble granules (SG), a water-dispersible powder (WP), a water soluble powder (SP), granules (GR), encapsulated granules (CG), fine granules (FG), macrogranules (GG), an aqueous suspo-emulsion (SE), a capsule suspension (CS) and microgranule (MG). In certain embodiments, the formulation of the herbicidal composition is in the form of a suspension concentrate (SC). Depending upon the formulation, the composition according to the invention may also comprise water.

The herbicidal composition, comprising components (A) diflufenican and (B) glyphosate, can be employed in crop plants to control weeds and unwanted plant growth. Diflufenican is used to reduce the phytotoxicity of glyphosate. In turn, glyphosate is used to reduce the phytotoxicity of diflufenican.

Accordingly, in a further aspect, the present invention provides the use of component (A) diflufenican to reduce the phytotoxicity of component (B) glyphosate.

In a still further aspect, the present invention provides the use of component (B) glyphosate to reduce the phytotoxicity of component (A) diflufenican.

The present invention further provides a method of reducing the phytotoxic effects of component (A) difluenican by employing therewith component (B) glyphosate.

The present invention further provides a method of reducing the phytotoxic effects of component (B) glyphosate by employing therewith component (A) diflufenican.

In another aspect, provided herein is a method for reducing phytotoxicity of individually diflufenican and glyphosate to crop plants comprising:
applying to crop plants or to a locus thereof components:
(A) diflufenican; and
(B) glyphosate.

Similarly, the present invention further provides a method of reducing the phytotoxic effects of component (B) glyphosate by employing therewith component (A) diflufenican.

The invention therefore concerns a method for controlling undesired plant growth, while reducing phytotoxicity of glyphosate to crop plants which comprises applying to the crop plants or to the locus thereof diflufenican and glyphosate.

In a further aspect, the present invention provides a method for controlling unwanted plant growth at a locus comprising applying to the locus component (A) diflufenican and component (B) glyphosate.

Component (A) diflufenican and component (B) glyphosate may be applied to the locus or plants to be treated in any desired sequence, any combination, consecutively or simultaneously. Co-application of diflufenican and glyphosate can be achieved by using a separate formulation source for each component and mixing together (known as a tank-mix, ready-to-apply, spray broth, or slurry), optionally with other pesticides, such as other fungicides, insecticides and nematicides, or by using a single formulation mixture source (known as a pre-mix, concentrate, formulated compound or product), and optionally mixing together with other pesticides, such as other fungicides, insecticides and nematicides.

The methods of the present invention may employ a composition according to the first aspect of the present invention.

In general, the application rate of the herbicidal components depends on the specific active ingredient in the combination, the type of weed, the type of crop plant, and such factors as soil type, season, climate, soil ecology and the like. The application rate of the components for a given set of conditions can readily be determined by the person skilled in the art using routine trials.

The combined application rate of components (A) diflufenican; and (B) glyphosate may be in the range of from about 50 to 4000 grams per hectare (g/ha), preferably from 100 to 3000 g/ha, more preferably from 500 to 2000 g/ha, still more preferably from 600 to 2000 g/ha, more preferably still from 700 to 1800 g/ha, especially from 800 to 1600 g/ha, in particular from 900 to 1400 g/ha, more particularly from 900 to 1300 g/ha. In certain preferred embodiments, components (A) diflufenican; and (B) glyphosate are applied at a rate of about 960 g/ha or at a rate of about 1200 g/ha.

The application rate of diflufenican may be in the range of from 5 to 500 g/ha, preferably from 10 to 400 g/ha, more preferably from 20 to 300 g/ha, still more preferably from 30 to 250 g/ha, more preferably still from 50 to 200 g/ha, especially 60 to 180 g/ha, in particular from 70 to 160 g/ha, more particularly from 80 to 140 g/ha, such as from 90 to 120 g/ha. In certain preferred embodiments, diflufenican is applied at a rate of about 96 g/ha or at a rate of about 120 g/ha.

The application rate of glyphosate may be in the range of from 100 to 3500 g/ha, preferably from 200 to 2500 g/ha, more preferably from 300 to 2000 g/ha, still more preferably from 400 to 1800 g/ha, more preferably still from 500 to 1500 g/ha, especially from 600 to 1400 g/ha, more particularly from 700 to 1300 g/ha, in particular from 800 to 1200 g/ha, such as from 850 to 1100 g/ha. In certain preferred embodiments, glyphosate is applied at a rate of about 864 g/ha or at a rate of about 1080 g/ha.

Component (A) diflufenican and component (B) glyphosate may be employed in any suitable weight ratio to achieve the required effects of activity and reduced phytotoxicity. In general, the weight ratio of diflufenican to glyphosate may be in the range of from 25:1 to 1:25, preferably from 12:1 to 1:12, still more preferably from 9:1 to 1:9. Ratios of from 6:1 to 1:6, especially from 3:1 to 1:3 ay be employed. It is preferred that glyphosate is employed in a weight excess compared to the amount of diflufenican employed. More preferably, the weight ratio of diflufenican to glyphosate is up to 1:12, more preferably up to 1:9. Lowe ratios, such as 1:6, 1:3 or 1:1 may be employed. Most preferably, the weight ratio of diflufenican to glyphosate is from 1:5 to 1:12, more especially from 1:7 to 1:11, still more especially from 1:8 to 1:10, in particular 1:9.

The composition and method of the present invention may be used to reduce or prevent unwanted plant growth in a range of crop plants. The crop plants include: cereals, such as wheat, barley, rye, oats, rice, maize, sorghum, millet and manioc; beet, such as sugar beet and fodder beet; fruit, such as pomes, stone fruit and soft fruit, such as apples, pears, plums, peaches, almonds, cherries, or berries, for example, strawberries, raspberries and blackberries; leguminous plants, such as beans, lentils, peas and soybeans; oil plants, such as rape, mustard, poppy, olives, sunflowers, coconut, castor oil plants, cocoa beans and groundnuts; cucurbitaceae, such as marrows, cucumbers and melons; fibrous plants, such as cotton, flax, hemp and jute; citrus fruits, such as oranges, lemons, grapefruit and mandarins; vegetables, such as spinach, lettuce, asparagus, cabbages, carrots, onions, tomatoes, potatoes and paprika; lauraceae, such as avocados, cinnamon and camphor; and tobacco, nuts, coffee, aubergines, sugar cane, tea, pepper, vines (table grapes and grape juice grape vines), hops, bananas, natural rubber plants, eucalyptus, as well as ornamental plants.

Especially preferred crop plants are oil plants, citrus fruits and vines. Particularly preferred crop plants are olives, oranges and grapes.

The herbicidal composition and method of the present invention are effective in controlling undesired plant growth, for example, but not limited to:
Annual Meadow Grass (*Poa annua*), Barren Brome (*Bromus sterilis*)*,* Bird's-Foot Trefoil (*Lotus corniculata*), Black Medick (*Medicago lupulina*), Bristly Oxtongue (*Picris ecchioides*), Buck's Horn Plantain (*Plantago coronopus*), Cat's Ear (*Hypochoeris radicata*), Chickweed (*Stellaria media*), Clovers (*Trifolium* spp.), Cock's Foot (*Dactylis glomerata*), Common Amaranth (*Amaranthus ascendens*), Common Couch (*Agropyrom repens*), Common Daisy (*Bellis perennis*), Common Dandelion (*Taraxacum officinale*), Common Nettle (*Urtica dioica*), Common Orache (*Atriplex patula*), Corn Poppy (*Papaver rhoeas*), Corn Spurrey (*Spergula arvensis*), Creeping Buttercup (*Ranunculus repens*), Docks (*Rumex* spp.), Fat Hen (*Avena fatua*), Field Forget-Me-Not (*Myosotis arvensis*), Geraniums including Cranesbill (*Geranium* spp.), Greater Plantain (*Plantago major*)*,* Groundsel (*Senecio vulgaris*), Hairy Finger Grass (*Digitaria sanguinalis*), Hawks-Beard (*Crepis* spp.), Hedge Bedstraw (*Galium mollugo*), Hogweed (*Heracleum sphondyllium*), Italian Ryegrass (*Lolium multiflorum*), Knotgrass (*Polygonum aviculare*), Mayweeds (*Matricaria chamomilla*), Meadow Fescue (*Festuca pratensis*), Mugwort *(Artemisia vulgaris*), Nipple Wort (*Lapsana communis*), Onion couch (*Arrhennaterum elatius*), Pearlwort (*Sagina*), Ragwort (*Sennecio jacobea*), Ribwort Plantain (*Plantago lanceolata*), Rough Meadow Grass (*Poa trivialis*), Self-Heal (*Prunella vulgaris*)*,* Sheep's Fescue (*Festuca ovina*), Shepherd's Purse (*Capsella bursa-pastoris*), Speedwells (*Veronica* spp.), Sow Thistle spp. (*Sonchus* spp.), Sticky Mouse-Ear (*Cerastium* spp.), Tall Fescue (*Festuca arundinacea*), Toad Rush (*Juncus bufonius*), Vetches (*Vicia* spp.), White Clover (*Trifolium repens*), Wild Carrot (*Daucus carota*), Wild Parsnip (*Pastinaca* spp.), Willowherb spp. (*Epilobeum* spp.), Yarrow (*Achillea millefolium*)*.*

The present invention is further illustrated by the following working examples.

Unless otherwise indicated, percentages are weight percent.

### EXAMPLES

### Example 1 - Phytotoxicity and Efficiency

Test mixtures 1 to 10 were prepared by mixing finely ground active ingredients with auxiliaries (10% Propylene glycol, 5% Tristyrylphenol ethoxylates, 1% Sodium lignosulfonate, 1% Carboxymethylcellulose, 1% Silicone oil (in the form of a 75% emulsion in water), 0.1% Xanthan gum, 0.1% NIPACIDE® BIT 20, Water (Balance to 1L) to form aqueous suspension concentrates (SC). The formulations were then diluted to the desired dilution with water.

Formulations 1 to 10 are formulations according to the present invention. Formulations Comparative A, Comparative B and the Control were tested for comparison purposes. For further comparative purposes, formulation Comparative C was prepared comprising a combination of 2,3,5-trichloropyridin-4-ol, common name pyriclor, and glyphosate in the weight ratio indicated in Table 1 below.

Olive, orange and grape plants were planted in beds of good agricultural peat based growth medium and grown in a greenhouse. After the plants had emerged and grown to a height of about 10 cm (4 inches), separate beds of the plants were sprayed with one of the test mixtures at specific treating rates in grams of the active ingredient per hectare (g ai/ha).

Chickweed (*Stellaria media*) plants were planted in beds of good agricultural peat based growth medium and grown in a greenhouse. The plants were sprayed with one of the test mixtures at specific treating rates in grams of the active ingredient per hectare (g ai/ha).

After treating the plants with the test mixtures, the beds were maintained for about 1 week under greenhouse conditions conducive for good plant growth.

Visual ratings of phytotoxicity were made after 1 week. Phytotoxicity was ranked 0 to 5 (5 = severe phytotoxicity, that is leaves and stems showed severe yellowing, burning, or necrosis; 0 = no phytotoxicity).

The details of the formulations and the results are set forth below in Table 1.

The phytotoxicity ranking indicated in Table 1 relates to the observations made of the effects of the formulations on the olive, orange and grape plants. The effectiveness indicated in Table 1 relates to the activity of the formulations in controlling the growth of the chickweed plants, with an effectiveness of 100% indicating death of the treated chickweed plants.

**Table 1**

| **Formulation** | **Diflufenican (%)** | **Glyphosate (%)** | **Weight Ratio Diflufenican : Glyphosate** | **Treatment rate (g ai/ha)** | | **Phytotoxicity Ranking (1-5)** (Damage to olive, orange and grape plants) | **Effectiveness (%)** (Control of Chickweed, *Stellaria media*) |
|---|---|---|---|---|---|---|---|
| | | | | **Diflufenican** | **Glyphosate** | | |
| 1 | 27.5 | 2.5 | 12: 1 | 880 | 80 | 4.5 | 100 |
| 2 | 27 | 3 | 9:1 | 864 | 96 | 4.5 | 95 |
| 3 | 25 | 5 | 6:1 | 800 | 160 | 4 | 90 |
| 4 | 20 | 10 | 3:1 | 640 | 320 | 3.5 | 95 |
| 5 | 15 | 15 | 1:1 | 480 | 480 | 2.5 | 95 |
| 6 | 10 | 20 | 1:3 | 320 | 640 | 2 | 95 |
| 7 | 5 | 25 | 1:6 | 160 | 800 | 1 | 90 |
| 8 | 3 | 27 | 1:9 | 96 | 864 | 0.5 | 95 |
| 9 | 2.5 | 27.5 | 1:12 | 80 | 880 | 4 | 75 |
| 10 | 3 | 27 | 1:9 | 120 | 1080 | 0.5 | 95 |
| Comparative A | 3 | 0 | / | 96 | 0 | 4.5 | 25 |
| Comparative B | 0 | 27 | / | 0 | 864 | 5 | 40 |
| Comparative C | 3 (Pyriclor) | 27 | 1:9 | 96 | 864 | 5 | 85 |
| Control | 0 | 0 | / | 0 | 0 | 0 | 0 |

As can be seen from the data set out in Table 1 above, formulations 1 to 10 of the present invention exhibited a high level of activity in the control of chickweed. Formulations Comparative A and Comparative B each exhibited a significantly lower activity in the control of chickweed.

Further, the comparative formulations A and B containing either diflufenican or glyphosate as the active ingredient exhibited a very high level of phytotoxicity to the olive, orange and grape plants. The data demonstrate that the combination of diflufenican and glyphosate significantly reduced the phytotoxic effects on the crop plants olive, orange and grape. In particular, at a weight ratio of diflufenican and glyphosate of 1:9, the mixture exhibited very low phytotoxicity to the crop plants.

The comparative data also show that the combination of pyriclor, a pyridine herbicide, and glyphosate, Comparative C, exhibited a very high phytotoxicity to the olive, orange and grape crop plants.

## Claims

1. A herbicidal composition comprising components:
(A) diflufenican; and
(B) glyphosate.

2. The herbicidal composition according to claim 1, wherein the weight ratio of component (A) diflufenican to component (B) glyphosate is from 12:1 to 1:12.

3. The herbicidal composition according to either of claims 1 or 2, wherein glyphosate is present in a weight excess, preferably wherein the weight ratio of component (A) diflufenican to component (B) glyphosate is from 1:5 to 1:12, more preferably wherein the weight ratio of component (A) diflufenican to component (B) glyphosate is from 1:8 to 1:10.

4. The herbicidal composition according to any preceding claim, wherein a total amount of the component (A) and the component (B) is 5% to 99%by weight of the herbicidal composition.

5. The herbicidal composition according to any preceding claim, wherein the herbicidal composition is in a form of a water-soluble concentrate (SL), an emulsifiable concentrate (EC), an emulsion (EW), a suspension concentrate (SC), an oil-based suspension concentrate (OD), a flowable suspension (FS), water-dispersible granules (WG), water-soluble granules (SG), a water-dispersible powder (WP), a water-soluble powder (SP), granules (GR), encapsulated granules (CG), fine granules (FG), macrogranules (GG), microgranules (MG), a microemulsion (ME), a suspoemulsion (SE), or a microencapsulated suspension (CS).

6. A method for controlling unwanted plant growth at a locus comprising applying to the locus component (A) diflufenican and component (B) glyphosate.

7. The method according to claim 6, wherein the weight ratio of component (A) diflufenican to component (B) glyphosate is from 12:1 to 1:12.

8. The method according to either of claims 6 or 7, wherein glyphosate is employed in a weight excess, preferably wherein the weight ratio of component (A) diflufenican to component (B) glyphosate is from 1:5 to 1:12, more preferably wherein the weight ratio of component (A) diflufenican to component (B) glyphosate is from 1:8 to 1:10.

9. The method according to any of claims 6 to 8, wherein the application rate of component (A) diflufenican is from 5 to 500 g/ha and the application rate of component (B) glyphosate is from 100 to 3500 g/ha.

10. The method according to any of claims 6 to 9, wherein the locus contains one or more crop plants, preferably wherein the crop plants are selected from oil plants, citrus fruits and vines, more preferably olive, orange and grape plants.

11. Use of component (A) diflufenican to reduce the phytotoxicity of component (B) glyphosate.

12. Use of component (B) glyphosate to reduce the phytotoxicity of component (A) diflufenican.

13. A method of reducing the phytotoxic effects of component (A) difluenican by employing therewith component (B) glyphosate.

14. A method of reducing the phytotoxic effects of component (B) glyphosate by employing therewith component (A) diflufenican.

15. A method of reducing phytotoxicity of individually diflufenican and glyphosate to crop plants comprising:
applying to crop plants or to a locus thereof components:
(A) diflufenican; and
(B) glyphosate.
